(19) Europäisches Patentamt
European Patent Office
Office européen des brevets

(11) **EP 2 804 443 B1**

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(51) Int Cl.:
*H05B 33/08* *(2006.01)*    *H05B 37/02* *(2006.01)*

(21) Anmeldenummer: **13167676.9**

(22) Anmeldetag: **14.05.2013**

(54) **Verfahren zum Betreiben einer Leuchte**

Method for operating a light

Procédé destiné au fonctionnement d'une lampe

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.11.2014 Patentblatt 2014/47**

(73) Patentinhaber: **Herbert Waldmann GmbH & Co. KG**
**78056 Villingen-Schwenningen (DE)**

(72) Erfinder: **Stockburger, Marc**
**78052 Villingen-Schwenningen (DE)**

(74) Vertreter: **Westphal, Mussgnug & Partner**
**Patentanwälte mbB**
**Am Riettor 5**
**78048 Villingen-Schwenningen (DE)**

(56) Entgegenhaltungen:
**WO-A1-2013/067389        WO-A2-2012/063149**
**DE-A1-102010 031 428     US-A1- 2011 291 564**

**Beschreibung**

Die Erfindung betrifft eine Leuchte und ein Verfahren zum Betreiben einer Leuchte, welche ein erstes Leuchtmittel für eine direkte Beleuchtung und ein zweites Leuchtmittel für eine indirekte Beleuchtung eines Objektes aufweist. Dabei weist die Leuchte eine Steuereinrichtung auf, um das erste Leuchtmittel und das zweite Leuchtmittel getrennt voneinander anzusteuern sowie einen Lichtsensor zur Erfassung der Gesamtlichtmenge im Bereich des Lichtsensors einschließlich etwaig dort vorhandenen Fremdlichtes. Der Lichtsensor steht dabei mit der Steuereinrichtung in Verbindung.

Ein solches Verfahren und eine solche Leuchte sind beispielsweise aus DE 10 2009 016 753 A1 bekannt. Dort sind zur Raumbeleuchtung eine oder mehrere Stehleuchten vorgesehen, welche jeweils einzeln oder in ihrer Gesamtheit dazu ausgebildet sind, einen ersten Lichtanteil indirekt abzugeben, einen zweiten Lichtanteil großflächig direkt auf ein vorgesehenes Objekt abzugeben sowie einen dritten Lichtanteil im Wesentlichen gebündelt direkt abzugeben. Dabei ist der erste Lichtanteil zentral gesteuert, während der dritte Lichtanteil durch einen Benutzer ein- und ausschaltbar ist. Dabei ist vorgesehen, dass der von den Leuchten abgegebene Lichtanteil, der zu einer raumbezogenen Beleuchtung benutzt wird, zentral gesteuert ist, während hingegen der zur teilflächenbezogenen Beleuchtung genutzte Lichtanteil durch einen Benutzer einstellbar ist.

Aus DE 10 2010 031 428 A1 ist ein weiteres Verfahren zum Betreiben einer Leuchte bekannt. Dabei verfügt die Leuchte über eine erste Lichtquelle zur Erzeugung einer Allgemeinbeleuchtung und eine Steuereinheit, durch die die erste Lichtquelle Licht in unterschiedlichen Intensitäten unter Verwendung eines Helligkeits-Sollwertes ansteuert. Die Leuchte verfügt über einen Sensor zur Erfassung eines Helligkeits-Istwertes. Die Steuereinheit steuert die erste Lichtquelle in Abhängigkeit des vom Lichtsensor erfassten Helligkeits-Istwertes an. Weiterhin umfasst die Leuchte eine zweite Lichtquelle zur Erzeugung einer beispielsweise auf eine Arbeitsfläche gerichteten, direkten Beleuchtung. Diese zweite Lichtquelle kann in einen ersten und einen zweiten Schaltzustand versetzt werden, insbesondere ein- und ausgeschaltet werden. Die Steuereinheit ist dabei ausgebildet, den erwähnten Helligkeits-Sollwert bei einer Veränderung des Schaltzustandes der zweiten Lichtquelle zu verändern. Bei einem solchen Verfahren kann die zweite Lichtquelle nur ein- und ausgeschaltet werden. Eine Helligkeitsregelung dieser zweiten Lichtquelle findet nicht statt.

Des Weiteren sind zwischenzeitlich Leuchten, insbesondere Arbeitsplatz- oder Stehleuchten bekannt, die ein bestimmtes Objekt, beispielsweise einen Arbeitsplatz, direkt beleuchten mit einem ersten Leuchtmittel und eine indirekte Beleuchtung, beispielsweise einer Decke, mittels eines zweiten Leuchtmittels vorsehen. Solche Leuchten sind auch in ihrer Helligkeit variierbar mittels einer an der Leuchte befindlichen Sensoreinrichtung. Verfügen solche Leuchten über eine Sensorik zur Präsenzerkennung, also wenn sich eine Person der Leuchte nähert, so können diese Leuchten selbsttätig einschalten.

Problematisch bei derartigen Leuchten ist, dass diese bei Präsenzerkennung zwar einschalten, aber bei ungünstigen Beleuchtungssituationen ungewollt sofort wieder ausschalten. Eine solche ungünstige Beleuchtungssituation kann beispielsweise dann auftreten, wenn die anliegende Lichtmenge am Lichtsensor minimal unter dem Einschaltwert liegt und die indirekte Beleuchtung einen zu hohen Rückkopplungswert auf den Lichtsensor hat. Dann wird nämlich die Ausschaltschwelle unterschnitten und die Leuchte abgeschaltet. Dieses als Jo-Jo-Effekt zu beobachtende Phänomen gilt es bei Leuchten aber zu vermeiden.

Eine weitere problematische Beleuchtungssituation ergibt sich, wenn der den Sensor treffende Lichtanteil des von dem zweiten Leuchtmittel abgegebenen Lichts aufgrund der Raumsituation, in der sich die Leuchte befindet, sehr hoch ist. Dieses Problem der ungewollten Beeinflussung der verschiedenen Lichtanteile ist bisher ungelöst.

Hier setzt die vorliegende Erfindung an.

Die vorliegende Erfindung hat das Ziel, ein Verfahren zum Betreiben einer Leuchte der eingangs genannten Art sowie eine Leuchte anzugeben, also einer Leuchte mit getrennt ansteuerbarem ersten Leuchtmittel zum Bereitstellen eines direkten Lichtanteils und weiteren Leuchtmitteln zum Bereitstellen eines indirekten Lichtanteils, wobei aufgrund der aufgefundenen Regelung die oben genannten Nachteile vermieden werden.

Dieses Ziel wird durch ein Verfahren mit den Merkmalen des Anspruchs 1 erreicht.

Weiterbildungen dieses Verfahrens sind Gegenstand der Unteransprüche 2 bis 16.

Das Ziel wird auch durch eine Leuchte gemäß Anspruch 17 erreicht.

Dieses Verfahren sieht im Wesentlichen eine Steuereinrichtung mit Mitteln vor, um aus der vom Lichtsensor erfassten Gesamtlichtmenge eine errechnete Lichtmenge für die von dem zweiten Leuchtmittel erzeugte und am Lichtsensor ankommende, indirekte Lichtmenge zu subtrahieren und somit lediglich nach Maßgabe der am Lichtsensor ankommenden und von dem ersten Leuchtmittel erzeugten, direkten Lichtmenge sowie des gegebenenfalls am Lichtsensor vorhandenen Fremdlichtes die Leuchte anzusteuern, insbesondere ein- beziehungsweise auszuschalten.

Durch diese Maßnahme ist es mit einem einzigen an der Leuchte befindlichen Lichtsensor möglich, die von dem zweiten Leuchtmittel, das an der Leuchte das indirekte Licht abgibt, erzeugte Lichtmenge, welche abgeschwächt auf den Lichtsensor trifft, rechnerisch zu bestimmen und bei der Regelung beziehungsweise beim Einstellen der Helligkeit des ersten Leuchtmittels zu berücksichtigen.

In einer Weiterbildung der Erfindung weist die Steuereinrichtung hierfür eine Regelungsvorrichtung auf, welche aus der von dem Lichtsensor erfassten Gesamtlichtmenge die errechnete indirekte Lichtmenge abzieht beziehungsweise subtrahiert und ein Ausgangssignal beziehungsweise Stellsignal bereitstellt, um die Helligkeit des ersten Leuchtmittels einzustellen. Zweckmäßigerweise wird das Stellsignal hierfür einer geeigneten Wandlereinrichtung, die zwischen dem Ausgang der Steuereinrichtung und dem ersten Leuchtmittel geschaltet ist, zugeführt.

In einer Weiterbildung der Erfindung kann von dem ersten Stellsignal ein vorgegebener positiver oder negativer Wert abgezogen werden, um mit einem daraus gewonnenen zweiten Ausgangssignal unmittelbar die Helligkeit des zweiten Leuchtmittels anzusteuern. Hierdurch kann ein positiver oder negativer Offset bereitgestellt werden, um die Helligkeit des zweiten Leuchtmittels in Abhängigkeit der Helligkeit des ersten Leuchtmittels einzustellen. Beträgt der vorgegebene Wert beispielsweise 0,5, so bedeutet dies, dass das zweite Leuchtmittel immer halb so stark leuchtet wie das erste Leuchtmittel. Selbstverständlich sind hierfür auch andere Werte vorstellbar.

In einer Ausführungsform des erfindungemäßen Verfahrens wird das erwähnte zweite Ausgangssignal zur Steuerung des zweiten Leuchtmittels einem geeigneten Wandler zugeführt, der das eigentliche Stellsignal für das zweite Leuchtmittel bereitstellt.

In einer Weiterbildung des erfindungsgemäßen Verfahrens wird die Lichtmenge, die von dem zweiten Leuchtmittel stammt und am Lichtsensor ankommt, nicht messtechnisch ermittelt, sondern innerhalb der Steuereinrichtung errechnet. Dabei wird das zweite Ausgangssignal, das dem Wandler für das zweite Leuchtmittel zur Verfügung gestellt wird, mit einem geeigneten Faktor multipliziert. Dieser Faktor ist ein sogenannter Raumreflexionsfaktor und ein Maß dafür, inwieweit rechnerisch ermittelt eine von der zweiten Lichtquelle abgegebene indirekte Lichtmenge am Lichtsensor ankommt.

Dieser Raumreflexionsfaktor kann in einer Ausführungsform der Erfindung dadurch ermittelt werden, dass in einem anfänglichen Kalibrierungsmodus der Leuchte nur das zweite Leuchtmittel ein- und ausgeschaltet wird und dass aus der Differenz der dabei vom Lichtsensor ermittelten Lichtmengen und vorzugsweise auch der Kenntnis der Höhe eines zweiten Ausgangsstellwertes der Raumreflexionsfaktor bestimmt wird. Dabei ist es möglich, einen Mittelwert des Raumreflexionsfaktors dadurch zu bestimmen, dass eine Vielzahl von Ein- und Ausschaltzyklen der zweiten Lichtquelle erfolgt und hieraus aus den Einzelwerten ein rechnerischer Mittelwert bestimmt wird.

Es liegt auch im Rahmen der Erfindung, dass der Raumreflexionsfaktor nachgeführt wird, indem die erste Lichtquelle und anschließend die zweite Lichtquelle im späteren Betrieb, also nicht mehr im Kalibrierungsmodus, zeitversetzt eingeschaltet werden und aus der Differenz der dabei vom Lichtsensor ermittelten Lichtmenge und der Kenntnis der Höhe vom zweiten Eingangsstellwert der zuvor ermittelte Raumreflexionsfaktor korrigiert wird. Dabei kann das zeitversetzte Einschalten der ersten Lichtquelle für das direkte Licht und der zweiten Lichtquelle für das indirekte Licht beispielsweise im Sekundenbereich erfolgen.

Es liegt auch im Rahmen der Erfindung, dass die Anpassung des Raumreflexionsfaktors im Betrieb der Leuchte dynamisch erfolgt, also immer wieder korrigiert wird.

Es liegt auch im Rahmen der Erfindung, dass die zweite Lichtquelle für das indirekte Licht stets mit der ersten Lichtquelle für das direkte Licht ausschaltet. Es kann die zweite Lichtquelle auch immer mit der ersten Lichtquelle eingeschaltet werden. Allerdings empfiehlt sich, wie oben erwähnt, dieses Einschalten der zweiten Lichtquelle etwas zeitversetzt zum Einschalten der ersten Lichtquelle durchzuführen, um beispielsweise die oben erwähnte dynamische Nachführung des Raumreflexionsfaktors sicherzustellen.

Eine Weiterbildung der Erfindung sieht darüber hinaus vor, dass die zweite Lichtquelle für das indirekte Licht immer, wenn die erste Leuchte eingeschaltet ist, mindestens auf einem Minimalwert leuchtet, außer während der oben erwähnten Zeitspanne, wenn ein versetztes Einschalten der zweiten Leuchte möglich ist.

Es bietet sich an, dass die Leuchte einen Sensor zur Präsenzerkennung aufweist. Hierdurch kann bei Detektion einer sich bewegenden Person im Empfindlichkeitsbereich des Sensors die Leuchte einschalten, sofern es die Lichtverhältnisse aufgrund der Beleuchtungssituation erfordern. Über eine geeignete und in der Steuereinrichtung vorhandene Zeitschaltuhr kann die Leuchte selbsttätig ausschalten, wenn der Sensor zur Präsenzerkennung erfasst, dass sich keine Person mehr im Empfindlichkeitsbereich des Sensors befindet.

Zweckmäßig beim erfindungsgemäßen Verfahren ist, dass das erste Leuchtmittel und auch das zweite Leuchtmittel ausschalten, wenn ein von der Steuereinrichtung bereitgestellter, interner Stellwert für den direkten Lichtanteil an dem ersten Leuchtmittel innerhalb der Steuereinrichtung eine Ausschaltschwelle unterschreitet.

Das erfindungsgemäße Verfahren eignet sich besonders zum Betreiben von Arbeits- und/oder Stehleuchten. Das erfindungsgemäße Verfahren ist deshalb besonders zur Raumbeleuchtung optimal geeignet. Erfindungsgemäß kann vorgesehen werden, dass das erste Leuchtmittel und/oder zweite Leuchtmittel durch jeweils einen oder mehrere Leuchtkörper, insbesondere durch eine oder mehrere LED gebildet ist.

Das erfindungsgemäße Verfahren wird im Zusammenhang mit mehreren Figuren näher erläutert. Es zeigen:

Fig. 1     den prinzipiellen Aufbau einer Leuchte, wie sie beim erfindungsgemäßen Verfahren benutzt wird,

Fig. 2     ein Blockschaltbild der in Figur 1 dargestellten Leuchte,

Fig. 3     ein Ausführungsbeispiel einer Beleuchtungssituation mit einer Leuchte, die ausgeschaltet ist und zugehörende Kennlinien der in Figur 2 dargestellten Anordnung,

Fig. 4     eine ähnliche Darstellung wie in Figur 3, jedoch mit eingeschalteter Leuchte aufgrund einer Präsenzerkennung,

Fig. 5     eine ähnliche Darstellung wie in Figur 4, allerdings mit einem hohen externen Fremdlichtanteil, und

Fig. 6     eine ähnliche Darstellung wie in Figur 5 mit sehr hohem externen Fremdlichtanteil sowie ausgeschalteter Leuchte.

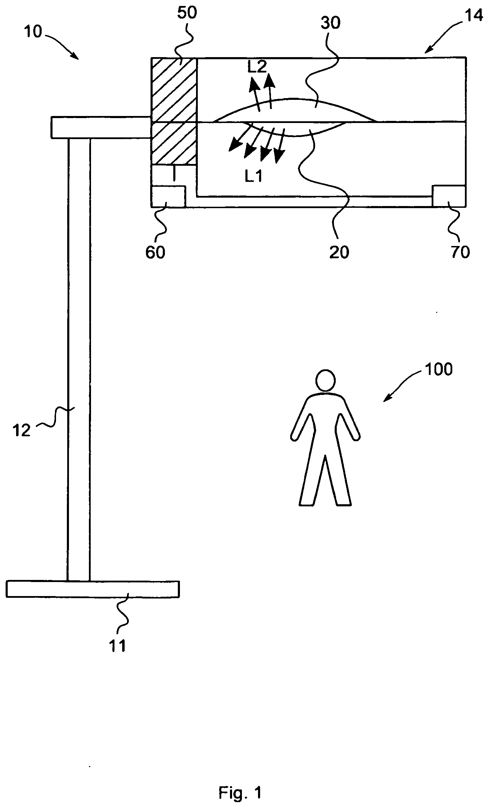

Figur 1 zeigt eine Leuchte 10, die vorliegend als Stehleuchte ausgebildet ist. Diese Leuchte 10 kann jedoch auch eine Tischleuchte oder eine Arbeitsleuchte sein und hierfür beispielsweise an einer Wand oder einer Decke über geeignete Befestigungsmittel montiert sein.

Die in Figur 1 dargestellte und beispielhaft als Stehleuchte ausgebildete Leuchte verfügt über einen Standfuß 11, von dem sich vertikal nach oben eine Haltestange 12 weg erstreckt. Am oberen Ende der Haltestange 12 ist ein Leuchtenkopf 14 gehalten mit einem Gehäuse, in welchem ein erstes Leuchtmittel 20 und ein zweites Leuchtmittel 30 angeordnet sind. Das erste Leuchtmittel 20 kann jede Art von Leuchtmittel sein, insbesondere auch ein LED-Leuchtmittel und ist dafür vorgesehen, ein Objekt 100, das eine Person oder ein Arbeitsplatz oder dergleichen sein kann, direkt zu beleuchten. Hierfür gibt das erste Leuchtmittel 20 eine Lichtmenge $L_1$ ab. Innerhalb des Gehäuses des Leuchtenkopfes 14 sitzt ein zweites Leuchtmittel 30, das ebenfalls ein oder mehrere LED sein können. Im Gegensatz zu dem ersten Leuchtmittel 20 ist dieses zweite Leuchtmittel 30 so innerhalb des Leuchtenkopfes 14 angeordnet, dass dieses vom Objekt 100 weg gerichtet Licht ausstrahlt. Die von diesem zweiten Leuchtmittel 30 ausgestrahlte Lichtmenge ist mit dem Bezugszeichen $L_2$ bezeichnet.

Des Weiteren verfügt die Leuchte 10 über eine Steuereinrichtung 50, welche im dargestellten Ausführungsbeispiel innerhalb des Leuchtenkopfes 14 angeordnet ist. Diese Steuereinrichtung 50 dient dazu, das erste Leuchtmittel 20 und das zweite Leuchtmittel 30 ein- und auszuschalten und auch jeweils in ihrer Helligkeit einzustellen. Hierfür ist die Steuereinrichtung 50 mit in Figur 1 nicht gezeigten Leitungen mit dem ersten Leuchtmittel 20 und dem zweiten Leuchtmittel 30 in Kontakt.

Schließlich verfügt die Leuchte 10 über einen Lichtsensor 60 sowie einen weiteren Sensor 70 zur Präsenzerkennung eines in den Empfindlichkeitsbereich des Sensors 70 eintretenden Objekts, insbesondere einer Person. Die Sensoren 60 und 70 sind hierfür mit der Steuereinrichtung in Verbindung. Selbstverständlich verfügt die Leuchte 10 auch über eine geeignete Stromversorgungseinrichtung, die der besseren Übersichtlichkeit in Figur 1 aber weggelassen worden ist.

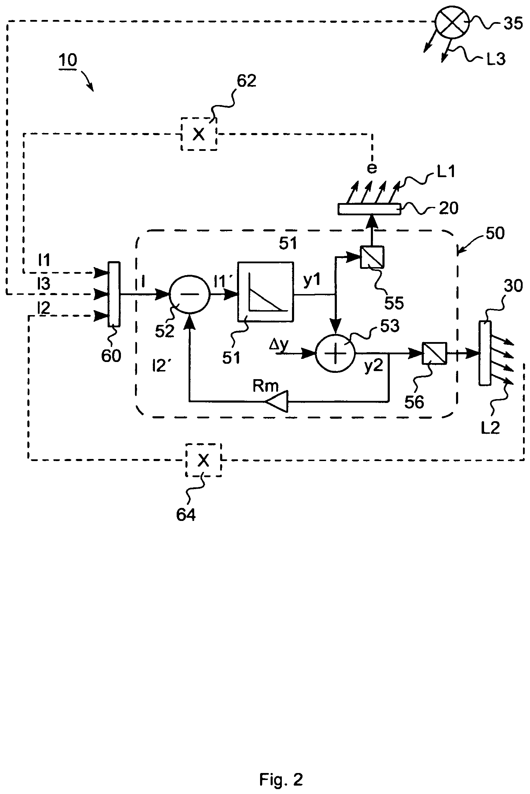

Figur 2 zeigt ein Blockschaltbild der einzelnen Komponenten, wie sie in der in Figur 1 dargestellten Leuchte 10 und insbesondere in der Steuereinrichtung 50 vorhanden sind. Die bereits bekannten Bezugszeichen stehen weiter für die gleichen Teile.

Die Leuchte 10 verfügt über die Steuereinrichtung 50, an welche eingangsseitig der Lichtsensor 60 angeschlossen ist. Ausgangsseitig ist die Steuereinrichtung 50 einerseits mit dem ersten Leuchtmittel 20 und andererseits mit dem zweiten Leuchtmittel 30 in Verbindung.

Geht man zunächst davon aus, dass das erste Leuchtmittel 20 eingeschaltet ist und eine Lichtmenge $L_1$ abstrahlt, so gelangt ein Teil dieser Lichtmenge $L_1$ als reduzierte Lichtmenge $l_1$ an den Lichtsensor 60. Diese Rückkopplung von der Lichtmenge $L_1$ auf den Lichtsensor 60 ist mit dem Rückkopplungspfad 62 bezeichnet. Auf diesem Rückkopplungspfad 62 treten Verluste auf, die beispielsweise durch das Medium Luft bedingt sind, in dem die Leuchte 10 steht. Bei einer rauchigen oder dampfigen Umgebung oder ungünstigen Reflexionseigenschaften ist die Dämpfung des von dem ersten Leuchtmittels 20 abgegebenen Lichts $L_1$ deutlich höher als bei Raumbedingungen, die klare Luftverhältnisse aufweisen.

Ein ähnlicher Rückkopplungspfad 64 ist von dem zweiten Leuchtmittel 30 zum Lichtsensor 60 gegeben. Das zweite Leuchtmittel 30 strahlt eine Lichtmenge $L_2$ ab, welche gedämpft als Lichtmenge $l_2$ an den Sensor 60 gelangt. Dieser Dämpfungsfaktor kann beträchtlich sein, weil das zweite Leuchtmittel 30 dazu vorgesehen ist, nur indirekt Licht abzustrahlen.

Schließlich kann an den Lichtsensor 60 auch eine Lichtmenge $l_3$ gelangen, die von einer Fremdlichtquelle 35, die eine Lichtmenge $L_3$ abstrahlt, stammt. Eine solche Fremdlichtquelle kann entweder eine andere Leuchte sein oder Fremdlicht, welches beispielsweise über eine Tür oder ein Fenster zu dem Lichtsensor 60 gelangt.

Vom Lichtsensor 60 wird deshalb eine Gesamtlichtmenge $l$ erfasst, die der Summe der Lichtanteile $l_1 + l_2 + l_3$ entspricht.

Diese Gesamtlichtmenge $l$ am Lichtsensor 60 wird der Steuereinrichtung 50 zugeführt.

Die Steuereinrichtung 50 verfügt über eine Regelungsvorrichtung 51, die mit einem Ausgang eines Subtrahierers 52 in Verbindung steht. Einem ersten Eingang des Subtrahierers 52 wird ein für die Gesamtlichtmenge $l$ repräsentatives Signal zugeführt. An einem zweiten Eingang des Subtrahierens 52 wird ein weiter unten noch erläutertes Signal $l_2'$ zugeführt, welches ei-

nem errechneten Wert entspricht für diejenige Lichtmenge $l_2$, wie sie am Lichtsensor 60 ansteht und durch das zweite Leuchtmittel 30 bedingt ist. Dieses zweite Signal $l_2'$ wird von der Gesamtlichtmenge l in dem Subtrahierer 52 subtrahiert.

Dem Eingang der Regelungsvorrichtung 51 wird demnach ein Signal $l_1'$ zugeführt, das aus der Gesamtlichtmenge l besteht abzüglich des errechneten Wertes $l_2'$. Die Regelungsvorrichtung 51 bestimmt aus diesem Eingangssignal $l_1'$ ein Stellsignal $y_1$ an ihrem Ausgang, welches über einen Wandler 55 als Stellgröße für die Helligkeit des ersten Leuchtmittels 20 verwendet wird.

Das Ausgangssignal $y_1$ wird des Weiteren einem Addierer 53 zugeführt und zwar an einem ersten Eingang. An einem zweiten Eingang dieses Addierers 53 wird ein Signal $\Delta_y$ zugeführt, um aus der Summe beider Signale eine Stellgröße $y_2$ bereitzustellen, welche über einen zweiten Wandler 56 zur Helligkeitssteuerung des zweiten Leuchtmittels 30 vorgesehen ist. Das Stellsignal $\Delta_y$ kann dabei beliebig vorgegeben werden. Beispielsweise kann das Stellsignal $\Delta_y$ den Wert -0,5 aufweisen, um immer dafür zu sorgen, dass das zweite Leuchtmittel 30 mit halber Helligkeit leuchtet im Vergleich zur Helligkeit des ersten Leuchtmittels 20.

Wie Figur 2 darüber hinaus zeigt, wird das Stellsignal $y_2$ mit einem Faktor $R_m$ multipliziert, um den Wert l2' zu ergeben. Dabei ist der Wert $R_m$ ein sogenannter Raumreflexionsfaktor und damit ein Maß dafür, wie viel Lichtmenge $l_2$ am Lichtsensor 60 von der von dem zweiten Leuchtmittel 30 abgegebenen Lichtmenge $L_2$ ankommt.

Dieser Raumreflexionsfaktor $R_m$ ist von der Steuereinrichtung 50 variierbar.

In einem Kalibrierungsmodus der Leuchte 10 wird dieser Faktor $R_m$ dadurch ermittelt, dass bei der Installation der Leuchte 10 in einem Raum zunächst von der Steuereinrichtung 50 nur das zweite Leuchtmittel 30 vorzugsweise mehrmals ein- und ausgeschaltet wird. Das erste Leuchtmittel $L_1$ bleibt dagegen aus. Die Steuereinrichtung ermittelt aus der Differenz des Ein- und Ausschaltens und der Kenntnis einer zweiten Ausgangsstellgröße $y_2$ die zunächst vorgegeben wird, einen Faktor, der ein Maß dafür ist, wie viel Lichtmenge von dem zweiten Leuchtmittel 30 am Lichtsensor 60 ankommt. Dieser Faktor Rm berechnet sich z. B. nach folgenden Formel:

$$Rm = \frac{l_t - l_{t-1}}{y_t}$$

wobei

$l_t$ aus Sensor erfasste Lichtmenge zum Zeitpunkt t
$l_{t-1}$ aus Sensor erfasste Lichtmenge zum Zeitpunkt

t-1
$y_t$ Stellgröße zum Zeitpunkt t

bedeuten.

Ist dieser Raumreflexionsfaktor $R_m$ einmal ermittelt, wird dieser von der Steuereinrichtung 50 im Betrieb der Leuchte mit dem Wert $y_2$ multipliziert, um dann - bei eingeschaltetem ersten Leuchtmittel 20 - rechnerisch den erwähnten Wert $l_2'$ zu ergeben.

Im Betrieb der Leuchte 10 kann dieser Wert $R_m$ von der Steuereinrichtung 50 immer korrigiert werden, indem beim Einschalten der Leuchte 10, das heißt beim Einschalten des ersten Leuchtmittel 20, das zweite Leuchtmittel 30 etwas zeitversetzt, zum Beispiel um wenige Sekunden, eingeschaltet wird. Daraus kann dann auf den Anteil desjenigen Lichtes, das am Lichtsensor 60 von dem zweiten Leuchtmittel 20 kommt, geschlossen werden.

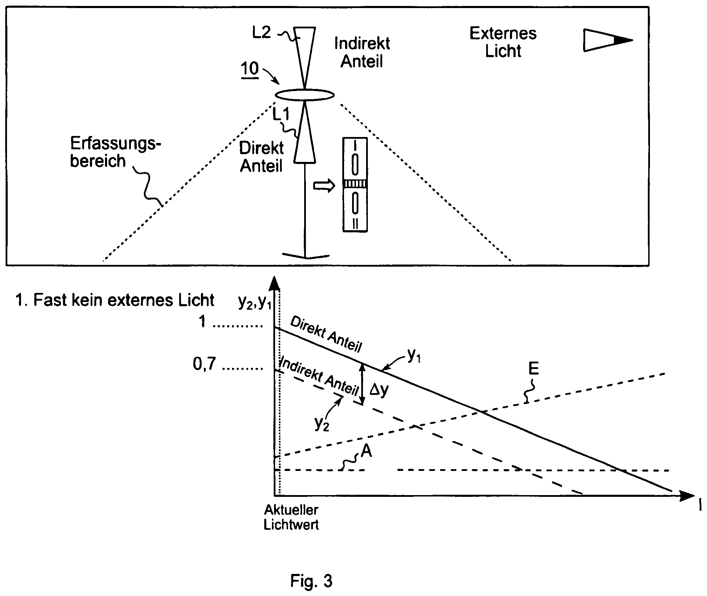

Figur 3 zeigt den typischen Kennlinienverlauf einer Leuchte, wie sie beispielsweise in der Regelungsvorrichtung 51 abgelegt ist. Die Kennlinien für die Stellgrößen $y_1$ und $y_2$ sind beispielhaft als im logarithmischen Maßstab lineare Kennlinien dargestellt in Abhängigkeit des vom Lichtsensors 60 aufgenommenen Wertes für die Gesamtlichtmenge 1. Unterstellt wird in dem in Figur 3 dargestellten Ausführungsbeispiel der Kennlinie, dass das zweite Leuchtmittel stets um einen Faktor 0,3 weniger hell leuchtet als das erste Leuchtmittel 20. $\Delta_y$ ist deshalb 0,3. Es sei angenommen, dass bei einem vom Sensor aufgenommenen Lichtwert l = 0 das erste Leuchtmittel 20 mit einer maximalen Lichtmenge leuchtet und hierfür ein Stellsignal $y_1 = 1$ bereitgestellt wird. Demzufolge wird im Betrieb der Leuchte 10 das zweite Lichtmittel 30 mit einem Stellsignal $y_2 = 0,7$ angesteuert.

Wie in Figur 3 ebenfalls zu erkennen, ist eine Einschaltschwelle E und eine Ausschaltschwelle A innerhalb der Steuereinrichtung vorgegeben, um die Leuchte 10 auszuschalten, wenn von der Steuereinrichtung 50 detektiert wird, dass die Ausschaltschwelle A von dem Stellsignal $y_1$ unterschritten wird und die Leuchte 10 eingeschaltet wird, wenn dieses Stellsignal $y_1$ die Einschaltschwelle E überschreitet.

Im Ausführungsbeispiel von Figur 3 ist angenommen, dass die Leuchte 10 ausgeschaltet ist und damit die Leuchte 10 weder eine Lichtmenge $L_1$ noch eine Lichtmenge $L_2$ abstrahlt. Des Weiteren ist angenommen, dass fast kein externes Licht auf den Lichtsensor der Leuchte 10 fällt.

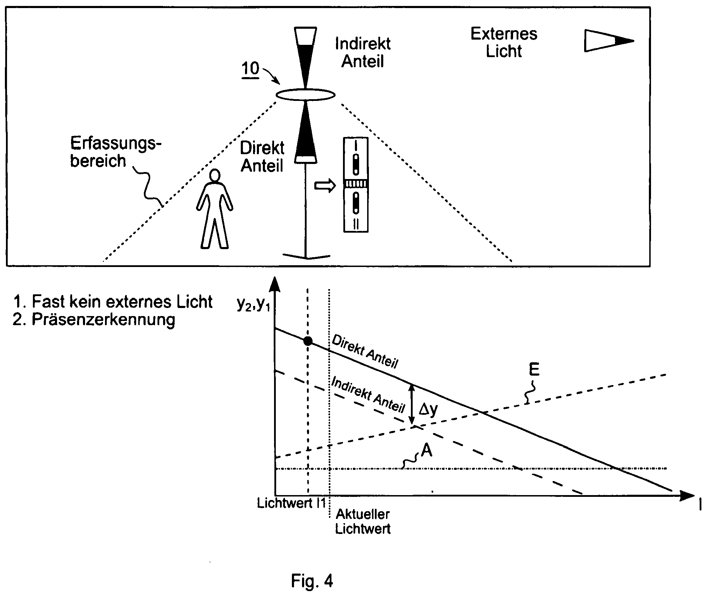

In der Situation von Figur 4 tritt eine Person in den Erfassungsbereich des Präsenzsensors der Leuchte 10. Darüber hinaus wird angenommen, dass weiterhin fast kein externes Licht auf den Lichtsensor der Leuchte 10 fällt. Die Leuchte 10 schaltet ein, weil der in der Steuereinrichtung ermittelte Lichtwert $l_1$ unterhalb der Einschaltschwelle E liegt. Dabei ist der Lichtwert 11 aufgrund der im Zusammenhang mit Figur 2 dargestellten Steuereinrichtung und des dort vorgesehenen Subtrahierens des errechneten Lichtanteils $l_2'$ kleiner als der

vom Lichtsensor aufgenommene aktuelle Lichtwert.

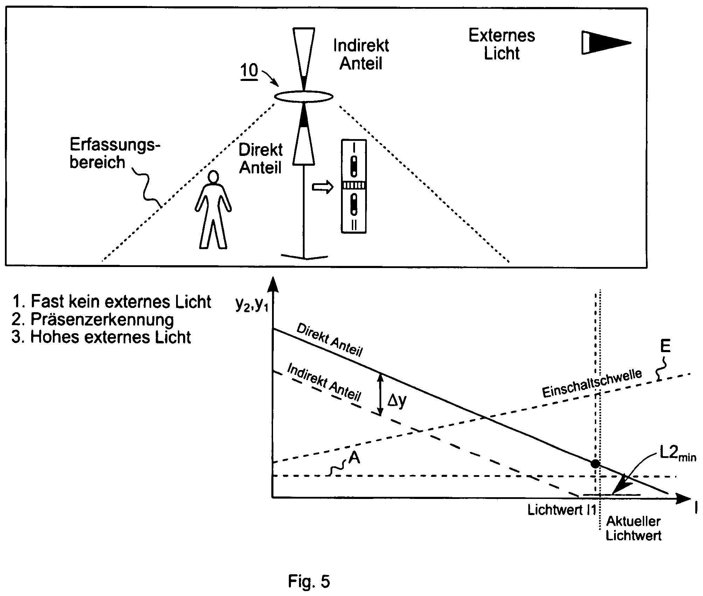

Figur 5 zeigt den Fall, dass hohes externes Licht im Erfassungsbereich des Lichtsensors vorhanden ist. Allerdings bleibt die Leuchte 10 eingeschaltet, weil der innerhalb der Steuereinrichtung 50 festgestellte Lichtwert $I_1$ noch oberhalb der Ausschaltschwelle A liegt. Wie in Figur 5 dargestellt, leuchtet jedoch in diesem Fall das zweite Leuchtmittel 30 für die indirekte Beleuchtung lediglich noch auf einem Minimalwert $L_{2Min}$.

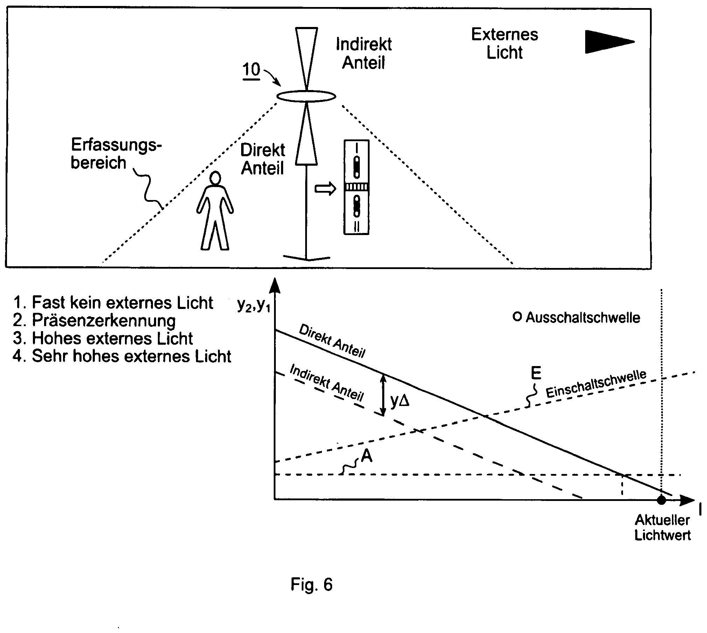

In Figur 6 ist der Einfall des externen Lichts auf den Lichtsensor noch größer. Wie ersichtlich, hat das Stellsignal $y_1$ die Ausschaltschwelle A unterschritten, sodass die Leuchte insgesamt ausschaltet.

**Bezugszeichenliste**

| | |
|---|---|
| 10 | Leuchte |
| 11 | Standfuß |
| 12 | Haltestange |
| 14 | Leuchtenkopf |
| 20 | erstes Leuchtmittel |
| 30 | zweites Leuchtmittel |
| 35 | Fremdlichtquelle |
| 50 | Steuereinrichtung |
| 51 | Regelungsvorrichtung |
| 52 | Subtrahierer |
| 53 | Addierer |
| 55 | Wandler |
| 56 | Wandler |
| 60 | Lichtsensor |
| 62 | Rückkopplungspfad |
| 64 | Rückkopplungspfad |
| 70 | Sensor für Präsenzerkennung |
| 100 | Objekt, Person |

$L_1$ abgestrahltes Licht des ersten Leuchtmittels 20
$L_2$ abgestrahltes Licht des zweiten Leuchtmittels 30
$L_3$ abgestrahltes Licht an der Fremdlichtquelle 35
$I_1$ am Lichtsensor empfangenes Licht des ersten Leuchtmittels 20
$I_2$ am Lichtsensor empfangenes Licht des zweiten Leuchtmittels 30
$I_3$ am Lichtsensor empfangenes Licht, Fremdlicht
$I_2'$ errechnete Lichtmenge, die am Lichtsensor 60 ankommt
$I_1'$ Gesamtlichtmenge, die am Lichtsensor 60 ankommt, abzüglich errechnete Lichtmenge 12'
$I$ am Sensor erfasste Gesamtlichtmenge, also $I = I_1 + I_2 + I_3$

$y_1$ Stellsignal zum Einstellen der Helligkeit des ersten Leuchtmittel 20
$y_2$ Stellsignal zum Einstellen der Helligkeit des zweiten Leuchtmittel 30
$\Delta_y$ Offset zwischen y1 und y2, also y1 - y2
$R_m$ Raumreflexionsfaktor
A Ausschaltschwelle
E Einschaltschwelle

**Patentansprüche**

1. Verfahren zum Betreiben einer Leuchte (10), welche ein erstes Leuchtmittel (20) für eine direkte Beleuchtung und ein zweites Leuchtmittel (30) für eine indirekte Beleuchtung eines Objektes (100) aufweist, sowie eine Steuereinrichtung (50), um das erste Leuchtmittel (20) und zweite Leuchtmittel (30) getrennt voneinander anzusteuern, wobei die Leuchte (10) mit mindestens einen an der Leuchte (10) montierten Lichtsensor (60) zur Erfassung der Gesamtlichtmenge (I) im Bereich des Lichtsensors (60) einschließlich etwaig dort vorhandenen Fremdlichtes aufweist und der Lichtsensor (60) mit der Steuereinrichtung (50) in Verbindung ist, **gekennzeichnet durch** folgende Verfahrensschritte:

 - der Lichtsensor (60) erfasst eine Gesamtlichtmenge (1),
 - die Steuereinrichtung (50) berechnet eine von dem zweiten Leuchtmittel (30) erzeugte und am Lichtsensor (60) ankommende indirekte Lichtmenge ($I_2'$),
 - die Steuereinrichtung subtrahiert die indirekte Lichtmenge ($I_2'$) von der erfassten Gesamtlichtmenge (I). zur Bestimmung der vom ersten Leuchtmittel (20) erzeugten direkten Lichtmenge ($I_1$) sowie des gegebenenfalls am Lichtsensor (60) vorhandenen Fremdlichtes,
 - die Steuereinrichtung steuert die Leuchte (10) nach Maßgabe des Ergebnisses der Subtraktion.

2. Verfahren nach Anspruch 1, **dadurch gekennzeichnet, dass** die Steuereinrichtung (50) eine Regelungsvorrichtung (51) aufweist, welche aus der vom Lichtsensor (60) erfassten Gesamtlichtmenge (I) abzüglich der errechneten indirekten Lichtmenge ($I_2'$) ein Ausgangssignal ($y_1$) bereitstellt zur Ansteuerung der Helligkeit des ersten Leuchtmittels (20).

3. Verfahren nach Anspruch 2, **dadurch gekennzeichnet, dass** aus dem ersten Ausgangssignal ($y_1$) ein vorgegebe-

ner positiver oder negativer Wert ($\Delta y$) abgezogen wird, um mit einem daraus gewonnenen zweiten Ausgangssignal ($y_2$) die Helligkeit des zweiten Leuchtmittels (30) anzusteuern.

4. Verfahren nach Anspruch 3,
**dadurchgekennzeichnet,** dass dieses zweite Ausgangssignal ($y_2$) mit einem Faktor ($R_m$) multipliziert wird und dieses Ergebnis der errechneten Lichtmenge ($I_2'$) entspricht, die von dem zweiten Leuchtmittel (30) abgegeben und am Lichtsensor (60) erfasst wird.

5. Verfahren nach Anspruch 4,
**dadurch gekennzeichnet, dass**
dieser Faktor ($R_m$) ein Raumreflexionsfaktor ist und ein Maß dafür darstellt, inwieweit rechnerisch ermittelt eine von dem zweiten Leuchtmittel (30) abgegebene indirekte Lichtmenge ($L_2$) am Lichtsensor (60) ankommt.

6. Verfahren nach Anspruch 5,
**dadurch gekennzeichnet, dass**
der Raumreflexionsfaktor ($R_m$) ermittelt wird, indem in einem anfänglichen Kalibrierungsmodus der Leuchte (10) nur das zweite Leuchtmittel (30) ein- und ausgeschaltet wird, und dass aus der Differenz der dabei vom Lichtsensor (60) ermittelten Lichtmengen und der Kenntnis der Höhe eines weiteren Ausgangsstellwertes der Raumreflexionsfaktor ($R_m$) bestimmt wird.

7. Verfahren nach Anspruch 5,
**dadurch gekennzeichnet, dass**
eine Vielzahl von Ein- und Ausschaltzyklen des zweiten Leuchtmittels (30) erfolgt und daraus ein Mittelwert der Raumreflexionsfaktoren ($R_m$) errechnet wird.

8. Verfahren nach Anspruch 5, 6 oder 7,
**dadurch gekennzeichnet, dass**
der Raumreflexionsfaktor ($R_m$) nachgeführt wird, indem das erste Leuchtmittel (20) und anschließend das zweite Leuchtmittel (30) zueinander zeitversetzt eingeschaltet werden und aus der Differenz der dabei vom Lichtsensor (60) ermittelten Lichtmengen der zuvor ermittelte Raumreflexionsfaktor ($R_m$) korrigiert wird.

9. Verfahren nach Anspruch 8,
**dadurch gekennzeichnet, dass**
das zeitversetzte Einschalten des ersten Leuchtmittels (20) und des zweiten Leuchtmittels (30) im Sekundenbereich erfolgt.

10. Verfahren nach einem der vorhergehenden Ansprüche,
**dadurch gekennzeichnet, dass**

die Anpassung des Raumreflexionsfaktors ($R_m$) dynamisch erfolgt.

11. Verfahren nach einem der Ansprüche 1 bis 10,
**dadurch gekennzeichnet, dass**
das zweite Leuchtmittel (30) für das indirekte Licht ($L_2$) stets mit dem ersten Leuchtmittel (20) für das direkte Licht ($L_1$) ausschaltet.

12. Verfahren nach einem der vorangegangenen Ansprüche,
**dadurch gekennzeichnet, dass**
das zweite Leuchtmittel (30) für das indirekte Licht ($L_2$) bei eingeschaltetem ersten Leuchtmittel (20) mindestens auf einem Minimalwert ($L_{2min}$) leuchtet mit Ausnahme einer Zeitspanne für ein versetztes Einschalten des zweiten Leuchtmittels (30).

13. Verfahren nach einem der vorangegangenen Ansprüche,
**dadurch gekennzeichnet, dass**
die Leuchte (10) einen Sensor (70) zur Präsenzerkennung aufweist und im Falle der Präsenzerkennung einer sich bewegenden Person die Leuchte (10) einschaltet, sofern es die Lichtverhältnisse aufgrund der Beleuchtungssituation erfordern.

14. Verfahren nach einem der vorangegangenen Ansprüche,
**dadurch gekennzeichnet, dass**
das erste Leuchtmittel (20) als auch das zweite Leuchtmittel (30) ausschaltet, wenn ein interner Stellwert ($y_1$) für den direkten Lichtanteil innerhalb der Steuereinrichtung (50) eine Ausschaltschwelle (A) unterschreitet.

15. Verfahren nach einem der Ansprüche 1 bis 14,
**dadurch gekennzeichnet, dass**
dieses zum Betreiben von Arbeits- und/oder Stehleuchten und damit zur Raumbeleuchtung eingesetzt wird.

16. Verfahren nach einem der Ansprüche 1 bis 15,
**dadurch gekennzeichnet, dass**
das erste Leuchtmittel (20) und/oder zweite Leuchtmittel (30) durch jeweils einen oder mehrere Leuchtkörper, insbesondere durch eine oder mehrere LED gebildet ist.

17. Leuchte (10), welche ein erstes Leuchtmittel (20) für eine direkte Beleuchtung und ein zweites Leuchtmittel (30) für eine indirekte Beleuchtung eines Objektes (100) aufweist, sowie eine Steuereinrichtung (50), um das erste Leuchtmittel (20) und zweite Leuchtmittel (30) getrennt voneinander anzusteuern, wobei die Leuchte (10) mit mindestens einen an der Leuchte (10) montierten Lichtsensor (60) zur Erfassung der Gesamtlichtmenge (I) im Bereich des Lichtsen-

sors (60) einschließlich etwaig dort vorhandenen Fremdlichtes aufweist, wobei der Lichtsensor (60) mit der Steuereinrichtung (50) in Verbindung ist, **dadurch gekennzeichnet, dass** die Steuereinrichtung (50) Mittel aufweist, um aus der vom Lichtsensor (60) erfassten Gesamtlichtmenge (I) eine errechnete Lichtmenge ($I_2$') für die von dem zweiten Leuchtmittel (30) erzeugte und am Lichtsensor (60) ankommende indirekte Lichtmenge ($I_2$) zu subtrahieren und somit lediglich nach Maßgabe der am Lichtsensor (60) ankommenden und von dem ersten Leuchtmittel (20) erzeugten direkten Lichtmenge ($I_1$) sowie des gegebenenfalls am Lichtsensor (60) vorhandenen Fremdlichtes ($I_3$) die Leuchte (10) anzusteuern, insbesondere ein- bzw. auszuschalten.

**Claims**

1. Method for the operation of a light (10) which has a first lighting means (20) for direct lighting and a second lighting means (30) for indirect lighting of an object (100), and a control device (50) for controlling the first lighting means (20) and second lighting means (30) separately from each other, wherein the light (10) has at least one light sensor (60) mounted on the light (10) for detecting the total amount of light (I) in the region of the light sensor (60) including any extraneous light present there and the light sensor (60) is connected to the control device (50), **characterised by** the following method steps:

   - the light sensor (60) detects a total amount of light (I),
   - the control device (50) calculates an indirect amount of light ($I_2$') generated by the second lighting means (30) and reaching the light sensor (60),
   - the control device subtracts the indirect amount of light ($I_2$') from the detected total amount of light (I) in order to determine the direct amount of light ($I_1$) generated by the first lighting means (20) and the extraneous light potentially present at the light sensor (60),
   - the control device controls the light (10) in accordance with the result of the subtraction.

2. Method according to claim 1, **characterised in that** the control device (50) has a regulating device (51) which provides an output signal ($y_1$) from the total amount of light (I) detected by the light sensor (60) minus the calculated indirect amount of light ($I_2$') in order to control the brightness of the first lighting means (20).

3. Method according to claim 2,

**characterised in that** a predetermined positive or negative value ($\Delta y$) is deducted from the first output signal ($y_1$) in order to control the brightness of the second lighting means (30) with a second output signal ($y_2$) obtained therefrom.

4. Method according to claim 3, **characterised in that** this second output signal ($y_2$) is multiplied by a factor ($R_m$) and this result corresponds to the calculated amount of light ($I_2$') which is emitted by the second lighting means (30) and detected at the light sensor (60).

5. Method according to claim 4, **characterised in that** this factor ($R_m$) is a space reflection factor and represents a measure for the extent to which, determined by calculation, an indirect amount of light ($L_2$) emitted by the second lighting means (30) reaches the light sensor (60).

6. Method according to claim 5, **characterised in that** the space reflection factor ($R_m$) is determined by only the second lighting means (30) being switched on and off in an initial calibration mode of the light (10), and the space reflexion factor ($R_m$) is determined by the difference between the amounts of light thus determined by the light sensor (60) and the knowledge of the amount of an additional output set value.

7. Method according to claim 5, **characterised in that** a plurality of switching on and off cycles of the second lighting means (30) takes place and an average value of the space reflection factors ($R_m$) is calculated therefrom.

8. Method according to claim 5, 6 or 7, **characterised in that** the space reflection factor ($R_m$) is adjusted by the first lighting means (20) and subsequently the second lighting means (30) being switched on with a time delay with respect to each other and the space reflection factor ($R_m$) determined beforehand is corrected by the difference between the amounts of light thus determined by the light sensor (60).

9. Method according to claim 8, **characterised in that** the time-delayed switching on of the first lighting means (20) and the second lighting means (30) takes place in the seconds range.

10. Method according to one of the preceding claims, **characterised in that**

the space reflection factor ($R_m$) is adjusted dynamically.

**11.** Method according to one of claims 1 to 10, **characterised in that** the second lighting means (30) for indirect light ($L_2$) always switches off with the first lighting means (20) for direct light ($L_1$).

**12.** Method according to one of the preceding claims, **characterised in that**, when the first lighting means (20) is switched on, the second lighting means (30) for indirect light ($L_2$) is illuminated at least to a minimum value ($L_{2min}$) with the exception of a period of time for a time-delayed switching on of the second lighting means (30).

**13.** Method according to one of the preceding claims, **characterised in that** the light (10) has a sensor (70) for presence detection and in the case of presence detection of a moving person, the light (10) switches on provided that the lighting conditions require this due to the lighting situation.

**14.** Method according to one of the preceding claims, **characterised in that** the first lighting means (20) and the second lighting means (30) switch off when an internal set value ($y_1$) for the direct light portion within the control device (50) falls below a switch-off threshold (A).

**15.** Method according to one of claims 1 to 14, **characterised in that** this is used to operate work and/or standing lights and thus for room lighting.

**16.** Method according to one of claims 1 to 15, **characterised in that** the first lighting means (20) and/or second lighting means (30) are formed of one or more respective lighting bodies, in particular of one or more LEDs.

**17.** Light (10) which has a first lighting means (20) for direct lighting and a second lighting means (30) for indirect lighting of an object (100), and a control device (50) for controlling the first lighting means (20) and second lighting means (30) separately from each other, wherein the light (10) has at least one light sensor (60) mounted on the light (10) for detecting the total amount of light (I) in the region of the light sensor (60) including any extraneous light present there, wherein the light sensor (60) is connected to the control device (50), **characterised in that** the control device (50) has means to subtract a calculated amount of light ($I_2$') for the indirect amount of light ($I_2$) generated by the second lighting means (30) and reaching the light sensor (60) from the total amount of light (I) detected by the light sensor (60) and thus only control, in particular switch on or off, the light (10) in accordance with the direct amount of light ($I_1$) reaching the light sensor (60) and generated by the first lighting means (20), and the extraneous light ($I_3$) potentially present at the light sensor (60).

**Revendications**

**1.** Procédé de gestion d'une lampe (10) comprenant un premier élément de lampe (20) permettant un éclairage direct et un second élément de lampe (30) permettant un éclairage indirect d'un objet (100) ainsi qu'un dispositif de commande (50) permettant de commander le premier élément de lampe (20) et le second élément de lampe (30) séparément l'un de l'autre, la lampe (10) comprenant au moins un capteur de lumière (60) monté sur celle-ci et permettant de détecter la quantité totale de lumière (I) dans la zone de ce capteur de lumière (60), y compris toute lumière étrangère qui y est présente, et le capteur de lumière (60) étant en liaison avec le dispositif de commande (50),
**caractérisé en ce qu'**il comprend les étapes suivantes :

- le capteur de lumière (60) détecte la quantité totale de lumière (I),
- le dispositif de commande (50) calcule la quantité de lumière indirecte ($I_2$') émise par le second élément de lampe (30) et arrivant sur le capteur de lumière (60),
- le dispositif de commande soustrait la quantité de lumière indirecte ($I_2$') de la quantité de lumière totale (I) détectée pour déterminer la quantité de lumière directe ($I_1$) émise par le premier élément de lampe (20), ainsi que la lumière étrangère, le cas échéant présente sur le capteur de lumière (60),
- le dispositif de commande commande la lampe (10) en fonction des résultats de la soustraction.

**2.** Procédé conforme à la revendication 1, **caractérisé en ce que** le dispositif de commande (50) comprend un dispositif de régulation (51) qui, à partir de la quantité de lumière totale (I) détectée par le capteur de lumière (60), déduction faite de la quantité de lumière indirecte ($I_2$') calculée, fournit un signal de sortie ($y_1$) pour commander la luminosité du premier élément de lampe (20).

**3.** Procédé conforme à la revendication 2, **caractérisé en ce qu'** une valeur positive ou négative ($\Delta_y$) est déduit du premier signal de sortie ($y_1$) pour commander la luminosité du second élément de lampe (30) avec un second signal de sortie ($y_2$) obtenu à partir de celle-ci.

4. Procédé conforme à la revendication 3,
**caractérisé en ce que**
le second signal de sortie ($y_2$) est multiplié par un facteur ($R_m$) et ce résultat correspond à la quantité de lumière ($I_2$') calculée qui est délivrée par le second élément de lampe (30) et est détectée au niveau du capteur de lumière (60).

5. Procédé conforme à la revendication 4,
**caractérisé en ce que**
le facteur ($R_m$) est un facteur de réflexion spatiale et indique par le calcul dans quelle mesure, la quantité de lumière indirecte ($L_2$) délivrée par le second élément de lame (30) parvient au capteur de lumière (60).

6. Procédé conforme à la revendication 5,
**caractérisé en ce que**
le facteur de réflexion spatiale ($R_m$) est déterminé en ne commutant et coupant que le second élément de lampe (30) dans un mode de calibrage initial de la lampe (10), et, le facteur de réflexion spatiale ($R_m$) est déterminé à partir de la différence entre les quantités de lumière détectées par le capteur de lumière (60) et la connaissance de la hauteur d'une autre valeur de réglage de sortie du facteur de réflexion spatiale (Rm).

7. Procédé conforme à la revendication 5,
**caractérisé en ce qu'**
un ensemble de cycles de commutation et de coupure du second élément de lampe (30) est effectué, et on en déduit par le calcul, une valeur moyenne des facteurs de réflexion spatiale ($R_m$).

8. Procédé conforme à la revendication 5, 6 ou 7
**caractérisé en ce que**
le facteur de réflexion spatiale ($R_m$) est obtenu en commutant de façon décalée dans le temps le premier élément de lampe (20) puis le second élément de lampe (30), et le facteur de réflexion spatiale ($R_m$) préalablement déterminé est corrigé à partir de la différence des quantités de lumière ainsi détectées par le capteur de lumière (60).

9. Procédé conforme à la revendication 8,
**caractérisé en ce que**
la commutation décalée dans le temps du premier élément de lampe (20) et du second élément de lampe (30) s'effectue à l'échelle de la seconde.

10. Procédé conforme à l'une des revendications précédentes,

**caractérisé en ce que**
l'adaptation du facteur de réflexion spatiale ($R_m$) est effectuée dynamiquement.

11. Procédé conforme à l'une des revendications 1 à 10,
**caractérisé en ce que**
le second élément de lampe (30) destiné à la lumière indirecte ($L_2$) est toujours coupé avec le premier élément de lampe (20) destiné à la lumière directe ($L_1$).

12. Procédé conforme à l'une des revendications précédentes,
**caractérisé en ce que**
le second élément de lampe (30) destiné à la lumière indirecte ($L_2$) éclaire au moins avec une valeur minimum ($L_{2min}$) lorsque le premier élément de lampe (20) est commuté, à l'exception d'une durée destinée à permettre une commutation du second élément de lampe (30).

13. Procédé conforme à l'une des revendications précédentes,
**caractérisé en ce que**
la lampe (10) comporte un capteur (70) de reconnaissance de présence, et, en cas de reconnaissance de la présence d'une personne qui se déplace, la lampe (10) est commutée dans la mesure où le rapport de luminosité le nécessite en raison de la situation d'éclairage.

14. Procédé conforme à l'une des revendications précédentes,
**caractérisé en ce que**
le premier élément de lampe (20) et également le second élément de lampe (30) sont coupés lorsqu'une valeur de réglage interne ($y_1$) de la proportion de lumière directe passe au-dessous d'un seuil de coupure (A) dans le dispositif de commande (50).

15. Procédé conforme à l'une des revendications 1 à 14,
**caractérisé en ce qu'**
il est mis en oeuvre pour gérer des lampes de travail et/ou des lampadaires, et ainsi pour l'éclairage spatial.

16. Procédé conforme à l'une des revendications 1 à 15,
**caractérisé en ce que**
le premier élément de lampe (20) et/ou le second élément de lampe (30) est(sont) formé(s) par un(plusieurs) corps lumineux, en particulier par une (plusieurs) LED.

17. Lampe (10) comprenant un premier élément de lampe (20) destiné à un éclairage direct et un second élément de lampe (30) destiné à un éclairage indirect d'un objet (100) ainsi qu'une installation de commande (50) permettant de commander le premier élément de lampe (20) et le second élément de lampe (30) indépendamment l'un de l'autre, la lampe (10) comportant au moins un capteur de lumière (60) monté sur cette lampe (10) pour détecter la quantité de lumière totale (I) dans la zone du capteur de lumière (60), y compris la lumière étrangère éventuellement présente, le capteur de lumière (60) étant relié au dispositif de commande (50),

**caractérisée en ce que**

le dispositif de commande (50) comporte des moyens permettant de soustraire de la quantité de lumière totale (I) détectée par le capteur de lumière (60) une quantité de lumière calculée ($I_2'$) de la quantité de lumière indirecte ($I_2$) émise par le second élément de lampe (30) et arrivant sur le capteur de lumière (60), et ainsi de commander la lampe (10), en particulier de la commuter ou de la couper uniquement conformément à la quantité de lumière directe ($I_1$) arrivant sur le capteur de lumière (60) et émise par le premier élément de lampe (20) et à la lumière étrangère ($I_3$) éventuellement présente au niveau du capteur de lumière (60).

Fig. 1

Fig. 2

Fig. 3

Fig. 4

Indirekt Anteil

Externes Licht

10

Erfassungs-bereich

Direkt Anteil

1. Fast kein externes Licht
2. Präsenzerkennung
3. Hohes externes Licht

$y_2, y_1$

Direkt Anteil

Indirekt Anteil

$\Delta y$

Einschaltschwelle

E

A

$L2_{min}$

Lichtwert I1

Aktueller Lichtwert

I

Fig. 5

EP 2 804 443 B1

Indirekt Anteil

Externes Licht

10

Erfassungs-bereich

Direkt Anteil

1. Fast kein externes Licht
2. Präsenzerkennung
3. Hohes externes Licht
4. Sehr hohes externes Licht

$y_2, y_1$

O Ausschaltschwelle

Direkt Anteil

Indirekt Anteil

$y\Delta$

E

Einschaltschwelle

A

I

Aktueller Lichtwert

Fig. 6

EP 2 804 443 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009016753 A1
- DE 102010031428 A1